# EUROPEAN PATENT APPLICATION

(11) **EP 2 581 606 A1**
(43) Date of publication of application: **17.04.2013**
(21) Application number: 12187579.3
(22) Date of filing: 08.10.2012
(51) Int. Cl.: F04D 29/02, F04D 29/22

(54) **Turbine for high air flow pump**

(30) Priority: 13.10.2011 ES 201131639
(71) Applicant: DESARROLLOS EMPRESARIALES VALAR, S.L., 08870 Sitges (Barcelona) (ES)
(72) Inventor: Soler Alvarez, Marina, 08870 SITGES (Barcelona) (ES)
(74) Representative: Ungria López, Javier

(57) **Abstract**

Pump turbine (impeller) comprises a first main body made of plastic material that integrates blades and a second annular body, made also of plastic material, frontally attached to the external extreme segments of the blades of the main first body.

It is characterized in that the annular body (3) is attached to the blades (2) of the main body (1) by using male elements, which are an integral part of the blades (2), and female elements set in the annular body (3), such attachment constituting an anchoring with a mechanical retention, the male elements comprising lugs (4) that are inserted with a tight fit into through-holes (5) constituent of the female elements, the attachment of both bodies (1-3) of the turbine being additionally complemented with an ultrasonic welding.

## Description

### FIELD OF THE INVENTION

The present invention, as expressed in the wording of this specification, relates to a turbine for high flow pumps, made of plastic material and being of the type that initially comprises a main body, which integrates blades and an annular body that is frontally attached to the extreme segments of the blades by the rear facing side of said main body, whereas the front facing side of said main body comprises a closed surface cut off in its center by an axial through-hole, intended to install, together with other elements, the turbine assembly onto a rotating shaft of a pump, the turbine assembly being located inside a casing that makes part of the aforementioned pump.

In light of this premise, the objective of the invention is focused in characteristic attaching means to fasten securely said annular body onto the blades of the main body of the turbine, avoiding any chance of the annular body coming detached while the turbine is in operation, turbine that rotates at great speed. This detachment would obviously bring about, at the very least, the malfunction and impairment of the pump, as well as the repair or change of at least the turbine. It should be noted that this turbine is subject to great stresses and efforts due to the high power of the engines, which rotate the turbine, power ranging from 5 to 30 horsepower (HP).

### BACKGROUND OF THE INVENTION

Nowadays, turbines for high flow pumps have always been manufactured with metallic materials, such as iron and bronze, but also in steel, brass and other metal materials, usually by casting or stamping processes.

The need to use metallic materials for the manufacture of turbines is due to the fact that they require a high mechanical resistance to withstand the significant power of the engines connected to the shafts of the turbines to transmit its rotational motion, such powers ranging from 5 to 30 horsepower (HP).

The use of metals for the manufacture of high power turbines presents problems with the manufacturing process and the quality of the finishes, given the impossibility of machining certain surfaces, which implies turbulence and loss of performance, in addition, their high cost should be noted.

The turbines are also made of plastic materials, in these cases the turbines of the pumps comprise a main body, which integrates the blades and an annular body that is attached to the main body by thermal fusion, but given said power ranges, the high efforts and stresses to which the turbine is subjected causes the detachment of the annular body, which breaks down, consequently the pump stops working correctly and the fluid flow that it was supplying is interrupted.

### DESCRIPTION OF THE INVENTION

In order to reach the objectives and to avoid the drawbacks mentioned in previous sections of this specification, the invention proposes a turbine for high flow pumps initially comprising a first main body made of plastic material, which integrates a series of blades, and a second annular body, also made of plastic material, frontally attached to the external extreme segments of the blades of the first main body

It is **characterized in that** the annular body is attached to the blades of the main body by means of male elements making part of the blades and female elements set in the annular body, such attachment constitutes an anchoring with mechanical retention, the male elements comprise lugs, which are inserted with a tight fit into through-holes constituent of the female elements, the attachment of both bodies of the turbine being additionally complemented with an ultrasonic welding.

The anchoring with mechanical retention between the lugs and the through-holes comprises end heads formed onto the free extremities of the lugs. Said end heads abut against the external free side of the annular body. These end heads are formed by heating the extreme portions of said lugs using thermal fusion.

Another feature of the invention is that the annular body comprises in its inner side an annular area having a conical shape with a concave-curved generatrix that additionally is supported upon convex-curved end seats set on the external extreme segments of the blades of the main body of the turbine, said lugs stemming from these end seats.

On the other hand, the annular body comprises a structure constituted by a first main segment having a conical shape with a curved generatrix and a second minor segment with little height that has a cylindrical shape, being the through-holes located in the first main segment of the annular body.

Another feature of the invention is that the inner annular area of the annular body is located in the first main segment making part of said annular body.

The lugs and the through-holes where said lugs are fitted comprise a cylindrical structure.

It should be noted that the idea of constructing turbines in plastic material for high flow pumps (engine powers ranging from 5 to 25 horsepower (HP)), allows the possibility of conventionally carrying out the welding of the annular body to the blades of the main body by ultrasounds, being this attachment insufficient to withstand the stresses generated during the operation of the pump, whose turbine rotates at approximately 3000 revolutions per minute, revolutions that come together with a high power, as it has been said before.

The idea of reinforcing the ultrasonic welding with a thermal fusion welding applied to each of the lugs or pivots to shape the end heads of mechanical retention, once inserted into the matching through-holes of the annular body, will end up having a rivet shaped structure, which increases notably the strength of the welding.

Next, for better comprehension purposes of this specification and making an integral part thereof, are attached some figures, in which by way of non-limitative illustration the object of the invention has been represented.

### BRIEF DESCRIPTION OF THE DRAWINGS

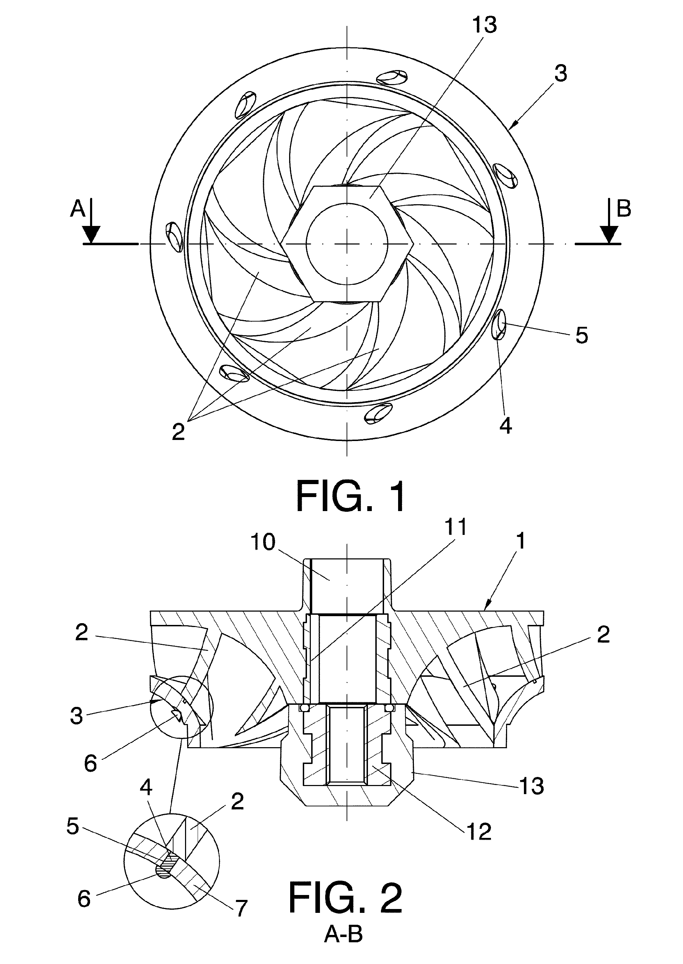

**Figure 1****.** - It shows a frontal view of the turbine for high flow pumps, objet of the invention. Basically, it comprises a main body that integrates the blades of the turbine and an annular body that is attached to the blades of the turbine through characteristic attachment means.
**Figure 2****.** - It shows a sectional view according to the cutting A-B line of the preceding figure.

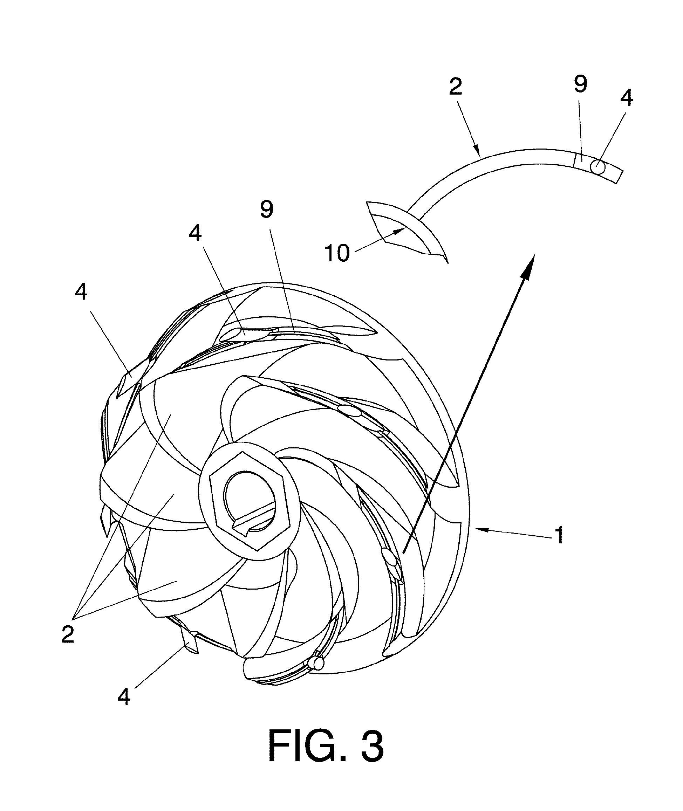

**Figure 3****.** - It shows a perspective view of the turbine of the invention.

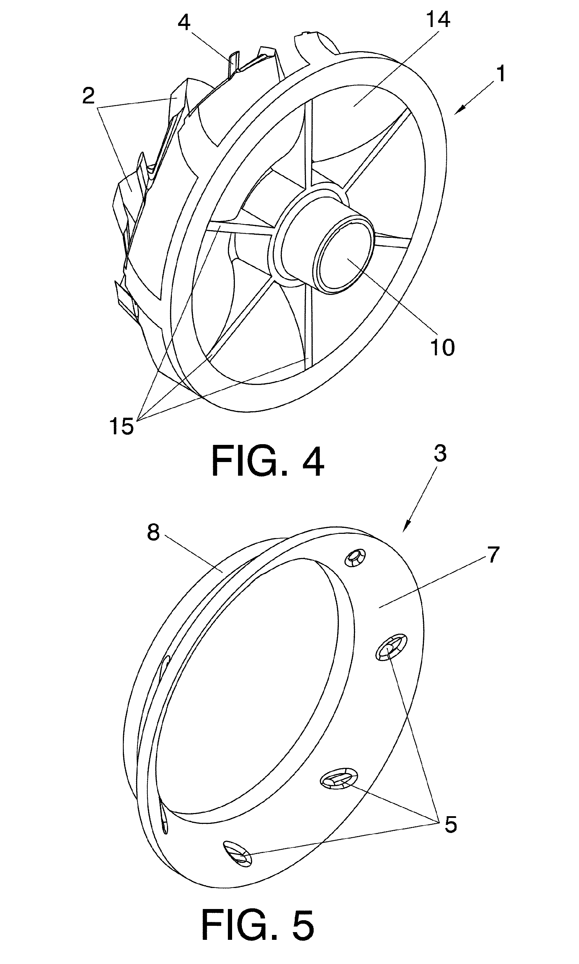

**Figure 4****.-** It shows another perspective view of the turbine.
**Figure 5****.** - It shows a perspective view of the annular body of the turbine.

### DESCRIPTION OF AN EXEMPLARY EMBODIMENT OF THE INVENTION

Taking into account the numerals adopted in the figures, the turbine for high flow pumps contemplates the following nomenclature employed in the description:
1.- Main body.
2.- Blades.
3.- Annular body.
4.- Lugs.
5.- Through-holes.
6.- End heads.
7.- First main segment.
8.- Second minor segment.
9.- Ends seats.
10.- Centered perforation.
11.- Bush.
12.- Internal locking extreme piece.
13.- External locking extreme piece.
14.- Base.
15.- Radial ribs.

It comprises a first main body 1 made of plastic material, which integrates blades 2, and a second annular body 3, also in plastic material, that is frontally attached to the external extreme segments of the blades 2, in a first phase by means of an ultrasonic welding combined with male elements determined by cylindrical lugs 4 and female elements determined by through-holes 5, which are joined together inserting one into another and by means of a thermal fusion welding applied onto the projecting portions of the cylindrical lugs 4, forming onto them a riveting structure that in turn generates a mechanical retention thanks to end heads 6 formed onto said cylindrical lugs 4, as a result of heating the projecting portions of said lugs 4.

The cylindrical lugs make integral part of the blades 2 of the main body 1, whereas the through-holes 5 are located in the annular body 3, in such a way that to attach the annular body 3 to the main body 1, first the cylindrical lugs are introduced inside the respective through-holes 5 of the annular body 3 and then in a ulterior phase the thermal fusion welding is applied onto the projecting portions of such cylindrical lugs 4.

On the other hand, the annular body 3 comprises a structure constituted by a first main segment 7 having a conical shape with a curved generatrix and a second minor segment 8 with little height that has a cylindrical shape, being the though-holes 5 located in the first main segment 7 of the annular body 3.

The first main segment 7 of the annular body 3 is additionally supported by its curved internal side, upon end seats set in the extreme segments of the blades 2, end seats 9 that comprise a concave curved shape adapted to the curvature of the internal side of the first main segment 7 of the annular body 3.

The characteristic combined attachment between both pieces 1-3 of the turbine, as it has been described, shall avoid any chance of said pieces coming detached from one another.

The main body 1 comprises in addition, other conventional elements necessary to couple the turbine assembly inside a casing of a pump, such elements consisting in a perforation 10 centered in an axial direction wherein a bush 11 is fitted, where in turn a transmission shaft (not shown in the figures) will be fitted to transmit the rotational movement to the turbine. Also locking extreme pieces: internal 12 and external 13, are incorporated, both arranged in the same direction that the transmission shaft, hiding the extremity thereof.

The main body 1 of the turbine comprises an structure constituted by a base 14 having a conical shape with an arched generatrix, reinforced by means of radial ribs 15 along its concave curved rear side, whereas, from its convex curved front side stem the blades 2 of the turbine.

## Claims

1. Turbine for high flow pumps, comprising a first main body made of plastic material that integrates blades and a second annular body, made also in plastic material, frontally attached to the external extreme segments of the blades; **characterized in that** the annular body (3) is attached to the blades (2) of the main body (1) by means of male elements making an integral part of the blades (2) and female elements set in the annular body (3), constituting such attachment an anchoring with mechanical retention, the male elements comprising lugs (4), which are inserted with a tight fit into through-holes (5) constituent of the female elements, the attachment of both bodies (1-3) of the turbine being additionally complemented by an ultrasonic welding.

2. Turbine for high flow pumps, according to claim 1, **characterized in that** the anchorage with mechanical retention between the lugs (4) and the through-holes (5) comprises end heads (6) formed onto the free extremities of the lugs (4), end heads (6) that abut against the external free side of the annular body (3).

3. Turbine for high flow pumps, according to claim 1, **characterized in that** the annular body (3) comprises in its internal side an annular area having a conical shape with a concave curved generatrix that additionally is supported upon convex curved end seats (9) set in the external extreme segments of the blades (2) of the main body (1) of the turbine, said lugs (4) stemming from such end seats (9).

4. Turbine for high flow pumps, according to claim 1, **characterized in that** the annular body (3) comprises a structure constituted by a first main segment (7) having a conical shape with a curved generatrix and a second minor segment (8) with little height that has a cylindrical shape, being the though-holes (5) located in the first main segment (7) of the annular body (3).

5. Turbine for high flow pumps, according to claims 3 and 4 **characterized in that** the annular area inside the annular body (3) is located in the first main segment (7) making part of such annular body (3).

6. Turbine for high flow pumps, according to claim 1, **characterized in that** the lugs (4) and through-holes (5) constituent of the male-female coupling between the main body (1) and the annular body (3) of the turbine, comprise said lugs (4) and through-holes (5) a cylindrical structure.
